# EUROPEAN PATENT SPECIFICATION

(11) **EP 4 421 484 B1**
(45) Date of publication and mention of the grant of the patent: **05.08.2026**
(21) Application number: 23158219.8
(22) Date of filing: 23.02.2023
(51) Int. Cl.: G01N 27/30, G01N 27/403, G01N 27/02

(54) **REFERENCE ELECTRODE FOR ELECTROCHEMICAL IMPEDANCE SPECTROSCOPY**
REFERENZELEKTRODE FÜR DIE ELEKTROCHEMISCHE IMPEDANZSPEKTROSKOPIE
ELECTRODE DE REFERENCE POUR SPECTROSCOPIE D'IMPEDANCE ELECTROCHIMIQUE

(43) Date of publication of application: 28.08.2024
(73) Proprietor: Martin-Luther-Universität Halle-Wittenberg, 06108 Halle (Saale) (DE)
(72) Inventor: MAHMOUDI ALIBEIGLOU, Behzad, 75172 Pforzheim (DE); MAIJENBURG, Albert Wouter, 06317 Seegebiet Mansfelder Land (DE)
(74) Representative: Gulde & Partner

(56) References cited:
- US-A- 4 360 415
- US-A1- 2011 192 720
- US-B2- 8 535 499
- WANG SHANGSHANG ET AL: "Electrochemical impedance spectroscopy", vol. 1, no. 41, 10 June 2021 (2021-06-10), pages 1 - 21, XP093040572, Retrieved from the Internet <URL:https://www.nature.com/articles/s43586-021-00039-w> DOI: 10.1038/s43586-021-00039-w

## Description

The present invention refers to a reference electrode for electrochemical impedance spectroscopy, particularly to a reference electrode for electrochemical impedance spectroscopy in an electrochemical cell at high and low frequencies from the MHz to the mHz range.

### TECHNOLOGICAL BACKGROUND AND PRIOR ART

Electrochemical impedance spectroscopy is typically performed in an electrochemical cell (e.g., a photoelectrochemical cell) in a 3-electrode configuration. The electrochemical cell typically includes a working electrode (WE) whose electrochemical properties should be investigated, a reference electrode (RE) to sense the potential of the WE versus the fixed potential of the RE, and a counter electrode (CE) to create any desired potential between the WE and the RE. The WE, the RE and the CE are immersed in an electrolyte inside the electrochemical cell and connected to a potentiostat for measuring the potential.

In order to perform electrochemical impedance spectroscopy (EIS), such as potentiodynamic electrochemical impedance spectroscopy (P-EIS) as well as potentiodynamic photoelectrochemical impedance spectroscopy (P-PEIS), in such an electrochemical cell with a 3-electrode configuration for obtaining highly reliable impedance spectra (Nyquist and Bode plots), it is a necessity to have a reliable reference electrode (RE). Using an unreliable reference electrode would namely lead to the harvesting of wrong data due to having huge phase shifts at higher frequencies (e.g., between 100 kHz to 1 MHz) and/or fluctuated electrochemical potentials, which might lead to the misinterpretation of the electronic and (photo)electrochemical behaviour of the working electrode (WE) under investigation.

However, all the currently available commercial reference electrodes (i.e., conventional prior art reference electrodes) are not capable to sustain EIS measurements at frequencies higher than ~100 kHz due to the occurrence of an oscillation in the frequency response analyser (FRA) inside the potentiostat as well as huge phase shifts (e.g., around 70°). In other words, the upper frequency range of the commercial reference electrodes is limited to ~100 kHz and performing reliable EIS measurements at frequencies higher than 100 kHz is not possible with the reference electrodes currently on the market due to their technical limitations.

There are a few solutions to circumvent these technical limitations, but these are not fully satisfying. For example, adding a platinum wire in parallel to any commercial reference electrode using a capacitor (e.g., 10 nF) in a semi-3-electrode cell configuration makes it possible to apply the EIS analysis at frequencies higher than 100 kHz. However, manipulating the reference electrode in this way will lead to the loss of the high accuracy of sensing the potential of the working electrode vs. the reference electrode during EIS measurements. Another example is the commercial RE-1BP reference electrode (Ag/AgCl) from ALS Co., Ltd, TOKYO JAPAN, with which it is possible to apply frequencies higher than 100 kHz, however, the obtained results are not reliable and have to be considered as an artefact. However, to avoid possible misinterpretations while studying electrochemical cells, including for example a semiconductor/electrolyte junction, performing EIS with an upper frequency range higher than 100 kHz (e.g., 1 to 10 MHz) is a necessity.

Therefore, to be able to perform any EIS measurement (including P-EIS and P-PEIS) on a (photo)electrochemical cell in a 3-electrode configuration, a reliable reference electrode with a highly stable electrochemical potential as well as a lowest phase shift (specifically at higher frequencies) should be employed. The basic requirement for such a reliable reference electrode is that it should have a low impedance at the experimental conditions under investigation to avoid any artefact and unreliable data sampling as well as an undesirable potential fluctuation at higher frequencies. In addition, employing a reference electrode with the aforementioned properties will make it possible to keep the bias potential (direct current (DC) polarization) of the working electrode versus the reference electrode in a stable condition throughout the EIS measurement, whereas the only fluctuation (perturbation) performed on the working electrode will be the performed sinusoidal alternating current (AC) signal of the frequency response analyser (FRA).

US 4 360 415 A discloses a noise suppressing bypass for a reference electrode which allows to reduce spurious a.c. noise signals impressed upon an electro-chemical reference electrode with separate half-cell and junction electrolytes by a low impedance bypass circuit including a capacitor connected in series between the electrode lead wire and an inert electronic conductor, such as a graphite rod, immersed in the junction electrolyte solution. In Wang (Wang, Shangshang, et al. "Electrochemical impedance spectroscopy." Nature Reviews Methods Primers 1.1 (2021): 41.), experimental complications in electrochemical impedance spectroscopy are discussed, including the influence of non-stationary behaviour at low frequencies and the need for reference electrodes. US 2011/192720 A1 relates to micromachined reference electrodes, for example, for use in miniaturized electrochemical sensors, and to methods for fabricating such reference electrodes and electrochemical sensors, for example, as a part of a microfluidic system.

It is thus an object of the present invention to overcome or reduce at least some of the disadvantages of the prior art and to provide a reliable reference electrode for electrochemical impedance spectroscopy at high and low frequencies from the MHz to the mHz range, and a corresponding method for their production.

### DESCRIPTION OF THE INVENTION

The objective of the invention is solved and the disadvantages of the prior art are overcome, at least partially, by a reference electrode of claim 1. Further, an electrochemical cell is provided. The dependent claims are directed to preferred embodiments of the present invention.

In particular, a new design is introduced to fabricate a new reference electrode (RE) that makes it possible to perform EIS measurements over a much larger frequency range (including frequencies higher than 100 kHz) in a 3-electrode cell configuration, while the sensing accuracy of the potential of the working electrode (WE) vs. the reference electrode (RE) inside the electrochemical cell does not change during the measurement. Using this design for the fabrication of any reference electrode, such as Ag/AgCl, Saturated calomel electrode or Copper-Copper(II) sulphate electrode, will make it possible to perform high frequency EIS measurements at accurately determined potentials vs. the chosen reference electrode.

An aspect of the present invention concerns a novel reference electrode for electrochemical impedance spectroscopy in an electrochemical cell (e.g., a photoelectrochemical cell) filled with a measurement electrolyte is provided, the reference electrode comprising a main probe formed of a conductive metal and having a proximal and a distal end, wherein the distal end has a coating with a salt of the metal of the main probe, wherein the proximal end of the main probe extends to outside the reference electrode for being connected to a potentiostat to sense the potential; an inner compartment adapted to accommodate an inner electrolyte; an outer compartment isolated from and enclosing the inner compartment, and adapted to accommodate an outer electrolyte separated from the inner electrolyte, wherein the outer compartment is configured to be immersed in the measurement electrolyte of the electrochemical cell, wherein the outer compartment has an opening to provide a pathway for ion diffusion between the outer electrolyte and the measurement electrolyte; and a frit to separate the inner from the outer compartment and to provide a pathway for ion diffusion between the inner electrolyte and the outer electrolyte; wherein the reference electrode further comprises an electrical bypass including an electrical bypass probe to bypass both pathways for ion diffusion. The electrical bypass probe can be miniaturized and placed beside/inside elements carrying ion diffusion, e.g., beside/inside the frit.

Preferably, the electrical bypass probe is formed of a conductive metal and having a proximal and a distal end, wherein the distal ends of the main probe and the electrical bypass probe are positioned at a distance from one another inside the inner compartment, wherein the proximal end of the electrical bypass probe extends to outside the reference electrode for being immersed into the measurement electrolyte inside the electrochemical cell to directly connect the inner electrolyte to the measurement electrolyte, thereby bypassing both pathways for ion diffusion.

The basic function of an electrical bypass according to the present invention is to bypass the high impedance due to the ion diffusion pathway of the tips, i.e., the respective tip of the inner and the outer compartment. Pathways for ion diffusion may thus preferably be bypassed inside the frit and/or at the interface between the inner and the outer compartment. A reference electrode according to the present invention exhibits a much lower impedance compared to conventional reference electrodes, mainly due to the electrical bypass that directly connects the inner electrolyte of the reference electrode to the measurement electrolyte.

The main probe and/or the bypass probe may be a metallic wire, preferably a round wire. The main probe may have a diameter of around 0.5 mm (preferably, between 0.1 mm and 2 mm, more preferably between 0.25 mm and 0.75 mm) and a length of around 12.0 cm (preferably between 8 cm and 16 cm), wherein the coating of the distal end may have a length of only around 9.0 cm (preferably between 60 % and 90 % of the total length of the main electrode). The bypass probe may have a diameter of around 0.1 mm (preferably between 0.05 mm and 0.15 mm) and a length of 12.0 cm (preferably between 8 cm and 16 cm, the length may be the same length as for the main electrode). The distal ends of the main probe and the electrical bypass probe may be positioned from one another at a distance of around 2.0 mm (preferably between 1.0 mm and 3.0 mm) inside the inner compartment, wherein the distal ends may be positioned essentially parallel inside the inner electrolyte filling the inner compartment. The main electrode may be positioned along a centre line of the inner compartment with the bypass electrode positioned aside, however, the main electrode and the bypass electrode may alternatively be positioned symmetrically with respect to said centre line of the inner compartment. Preferably, they should not touch each other.

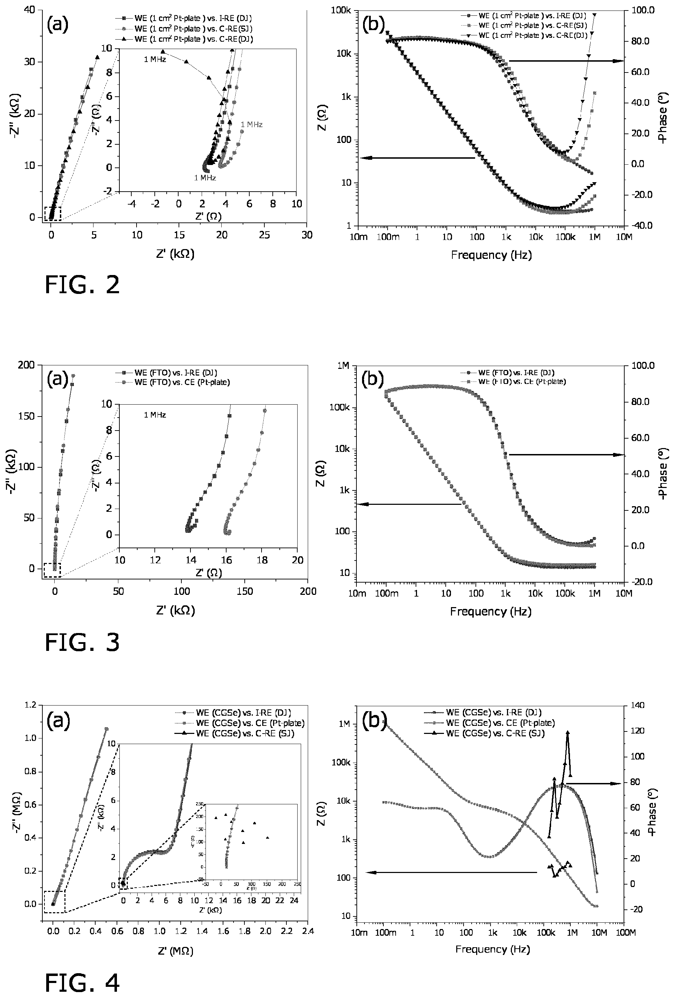

The electrical bypass may provide an additional electrical path that is inserted into the measurement electrolyte of the electrochemical cell (the electrolyte of the experiment) in order to bypass the ion diffusion pathway inside the ceramic frit, which is the interface between the inner and outer electrolytes inside the inner and outer compartments, the outer electrolyte and the glass plug. The bypass probe is the key to keep the overall impedance of the reference electrode as low as possible. Without the electrical bypass, the two ion diffusion pathways (between the outer electrolyte and the measurement electrolyte, and between the inner electrolyte and the outer electrolyte) create high impedances (low admittances) and make the currently available commercial reference electrodes (C-RE, i.e., conventional prior art reference electrodes) unable to carry out EIS measurements at higher frequencies. In other words, the prior art commercial reference electrodes are too sluggish (slow) to follow the fast potential perturbations (alterations) performed by the potentiostat during EIS analysis at higher frequencies. However, when applying higher frequencies during the EIS measurement, an electrical bypass according to the present invention will be active and allow to quickly pass the leakage current to reach the potentiostat without any capacitive delay and therefore it will not add any phase shift and artefact to the collected EIS spectra as demonstrated in the figures section (see Figures 2, 3 and 4).

In detail, prior art commercial reference electrodes with a single-junction (C-RE(SJ)) have only one tip (typically a Vycor glass frit or a ceramic frit) to probe and sense the electrochemical potential of the electrolyte via diffusion of the ions inside the internal body of the reference electrode, and pass a leakage current. This ion diffusion path via Vycor glass or a porous ceramic frit has a high impedance (low admittance) with capacitive behaviour, which makes the RE highly sluggish and unable to pass the leakage current at the minimum time needed to respond to the potential perturbations applied by the potentiostat during the EIS measurement. Therefore, the potentiostat cannot carry out the desired potential alterations (perturbations) needed at higher frequencies due to the sluggish response of the RE, and as a result, performing the EIS measurement at high frequencies (e.g., higher than 100 kHz) is not reliable with any commercial reference electrode currently available. Even worse is the use of a prior art commercial double-junction reference electrode (C-RE(DJ)), which further extends the pathway of ion diffusion leading to even higher impedances and a decreased upper frequency range that is available for the EIS measurement; in this case, EIS cannot be carried out at frequencies higher than ~30 kHz.

In order to circumvent this, an additional bypass probe can be used as a second sensing tip in addition to the main tip of the RE. This bypass probe can be used to compensate the high impedance of the glass plug and/or the ceramic frit of a C-RE via bypassing their ion diffusion path leading to a drastic decrease of the internal impedance and increase the admittance of the reference electrode. In other words, by adding an electrical bypass probe to a C-RE, two sensing points are used instead of a single tip to sense the potential. One is the tip of the actual reference electrode (e.g., Ag/AgCl) for sensing the potential of a measurement electrolyte and the other is the electrical bypass probe (e.g., Pt wire) for the EIS measurements at high frequencies. Even though this configuration forms a double-junction electrode, it has the capability to perform EIS measurements at frequencies as high as 10 MHz (highest frequency tested by the inventors, even higher frequencies might be possible).

It is mentioned that there is another and well-known way to decrease the impedance of a C-RE in order to perform EIS at higher frequencies. In this approach, the C-RE can be used in parallel to a platinum (Pt) wire with a capacitor between them, and with both electrodes directly connected to the potentiostat. However, by using this combination, the potential of the WE will be sensed versus the Pt wire instead of the actual C-RE, which is due to the short circuit of the capacitor at higher frequencies and the consecutive elimination of the RE. This would provide a different result (e.g., different Nyquist plots), specifically in the potentiodynamic mode of the EIS analysis due to a significant potential difference between the RE and the Pt wire in the same solution (e.g., E(Ag/AgCl) vs. E(Pt) = ~ -510 mV in 3 M NaCl). This concept is thus totally different from the use of an electrical bypass probe according to the present invention, since in this alternative concept the Pt wire is also connected to the potentiostat, whereas an electrical bypass probe of the present invention is not to be connected to any electrode or the potentiostat. Instead, the electrical bypass probe is only used as a bridge for transporting electrons between the inner electrolyte of the inner compartment of an RE and the measurement electrolyte used for the electrochemical experiment.

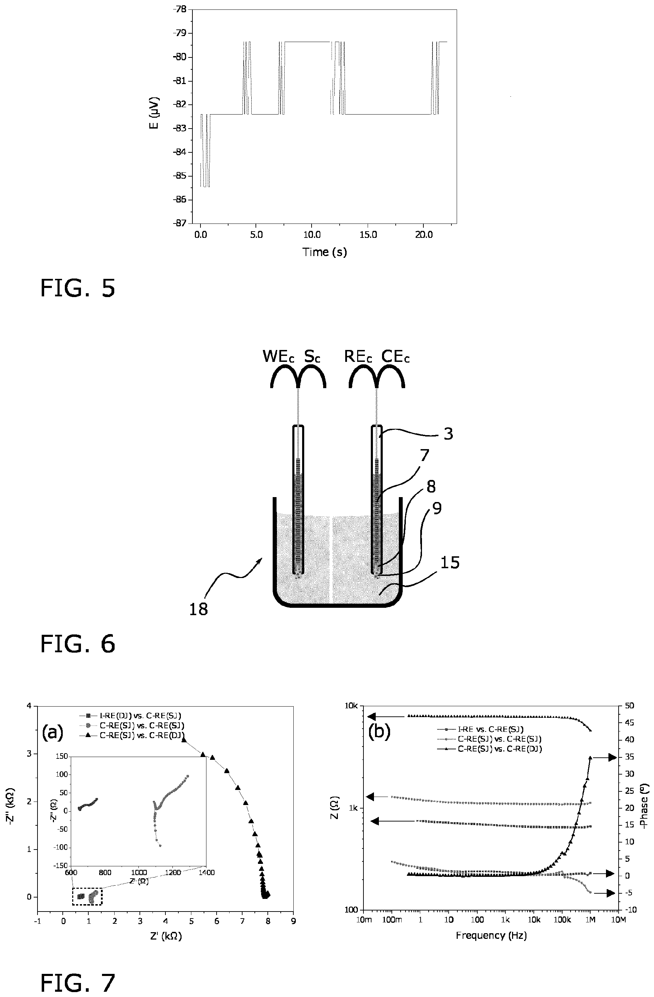

In a particularly preferred embodiment, a reference electrode according to the present invention (invented reference electrode, I-RE) is a double-junction Ag/AgCl-type RE with a ceramic frit and glass plug containing a silver wire (Ag) coated with a thin layer of silver chloride (AgCl), which is inserted inside an inner compartment of the RE. Although this is a double-junction RE, the internal impedance is only ~100 Ω, which is even lower than that of commercial single-junction reference electrodes (C-RE(SJ)). The internal impedance of all reference electrodes (including I-RE, C-RE(SJ), and a commercial double-junction reference electrode C-RE(DJ)) were measured in a 2-electrode configuration as shown in Figure 6. The figure reveals that the highest impedance of 7353 Ω was obtained for C-RE(DJ) and the lowest value of 100 Ω for the I-RE. The most reliable commercial reference electrode available with a single-junction compartment (C-RE(SJ)) shows an impedance of 550 Ω, which is still 5.5 times higher than the impedance of the I-RE (for more details about this, see Figure 7). This low internal impedance of the I-RE makes it able to perform all kinds of electrochemical impedance spectroscopy measurements (including P-EIS and P-PEIS) at higher frequencies in addition to the low frequencies.

The main probe may be a silver wire, preferably with a purity of at least 99.9%, more preferably of at least 99.99% and even more preferably with a purity of at least 99.999%. The silver wire may have a coating of silver chloride (AgCl) around the distal end.

In order to produce a highly stable electrochemical potential, the crucial part of most reference electrodes is a conductive metal (e.g., Ag) coated with its salt (e.g., AgCl) in the solid state, which is in equilibrium with its aqueous solution. For the results presented in the figure section, a preferred Ag/AgCl electrode was used for which a silver wire (Ag) with a purity of 99.99% was employed, which has been coated with a layer of AgCl. At first, the Ag wire was sonicated in acetone, ethanol and deionized (DI) water for 15 min each. Subsequently, it was immersed in an aqueous solution containing 10% hydrochloric acid (HCl) for 15 min and rinsed with DI water again. Afterwards, a section of this wire (i.e., the distal end) was immersed inside a graduated cylinder together with a platinum wire of the same length (as the counter electrode, which was also sonicated in 10% hydrochloric acid and DI water) with a distance of about 1 cm between both electrodes. Then, the cylinder was filled with a fresh 10% hydrochloric acid solution. The residual section (i.e., the proximal end) of the Ag wire was kept in air without exposure to the HCl solution. In order to coat the Ag wire with AgCl, first a short circuit voltage (0 V) was applied between both electrodes in a 2-electrode configuration (see Figure 6) for ~ 240 s. Subsequently, an oxidation voltage of +0.5 V was applied for another ~ 550 s, meaning that the potential of the Ag wire was kept at +0.5 V positive with respect to the Pt wire. Afterwards, the Ag/AgCl electrode was rinsed with DI water and dried in air.

The electrical bypass probe may be a platinum wire, preferably with a purity of at least 99.9%, more preferably with a purity of at least 99.99%, and even more preferably with a purity of at least 99.999%.

Preferably, the electrical bypass probe comprises at the proximal end a bypass electrode for being immersed into the measurement electrolyte, wherein the electrode and the distal end of the electrical bypass probe are connected directly or via a shielded cable. The electrode may be a metallic wire, plate, wire net or the like. The form and shape of the electrode should allow sufficient electrical contact to the measurement electrolyte in which the electrode is to be immersed. If the electrode and the distal end of the electrical bypass probe are directly connected, a metal-metal junction may be formed. However, the electrode and the electrical bypass probe are preferably made of the same metal and the electrode can thus be considered as an integral part (section) of the electrical bypass probe. A shielded cable may be used to connect the electrode and the distal end of the electrical bypass probe to extend the length of the connection.

Preferably, the bypass electrode is a platinum wire. The platinum wire of the bypass electrode may be the same wire as the wire of the electrical bypass probe. The bypass electrode should preferably be as close as possible to the opening / glass plug of the reference electrode without touching it.

In a particularly preferred embodiment, the electrical bypass probe is a platinum wire and the bypass electrode is a platinum wire. Thus, a single platinum wire may be used, wherein the distal end of the electrical bypass probe is positioned inside the inner compartment of the reference electrode and the proximal end of the electrical bypass probe extends to outside the reference electrode for being immersed into the measurement electrolyte inside the electrochemical cell. This may be an example of a direct connection between the bypass electrode and the distal end of the electrical bypass probe, i.e., the bypass electrode is directly formed by an end section of the electrical bypass probe wire. However, since a platinum wire of high purity is too expensive to use as a simple connection, a shielded cable may preferably be used to make the connection between the section of the electrical bypass probe that is immersed in the inner electrolyte and the bypass electrode. This cable is shielded to eliminate any noise from the environment, specifically when the EIS measurement is not carried out inside a Faraday cage. The electrical bypass probe may alternatively be configured to be directly immersed in the measurement electrolyte inside the electrochemical cell without forming a distinct bypass electrode at the proximal end.

Preferably, the inner compartment is filled with the inner electrolyte, wherein the inner electrolyte may be one of 3 M NaCl, 3 M KCI, saturated NaCl or saturated KCI.

Preferably, the outer compartment is filled with the outer electrolyte. In a particularly preferred embodiment, the outer electrolyte corresponds to the measurement electrolyte inside the electro-chemical cell (i.e., the main electrolyte of an EIS experiment). The outer electrolyte may thus be the same electrolyte as used for the EIS experiment, which is in contrast to the filling with the same electrolyte as used for the inner compartment (as commonly used for C-REs). The outer compartment may be filled at least 30 min before starting any EIS experiment, specifically before performing any potentiodynamic EIS (such P-EIS and P-PEIS) analysis in order to obtain a high stability of the sensed potential.

Preferably, the inner compartment and/or the outer compartment is a glassy or plastic tube compartment. The outer compartment is used to keep the outer electrolyte. It is separated from the electrochemical cell and the inner compartment. The inner compartment is used to keep the inner electrolyte. In addition, the distal ends of the main probe and the electrical bypass probe are also inserted in this compartment. It should be isolated from the external compartment, and the only connection should be the frit as the ion diffusion path at the tip of the glassy or plastic tube where the inner electrolyte is normally located.

Preferably, the frit is a ceramic or Vycor glass frit. A frit may have a diameter of around 1.5 mm (preferably between 0.5 mm and 2 mm) and a length of around 3.0 mm (preferably between 2.5 and 3.5 mm, more preferably below 2.5 mm). The frit is used to separate the inner and outer compartment and to provide a pathway for ion diffusion. The length of the frit should be as short as possible.

Preferably, the inner compartment comprises a sealable hole for filling the inner electrolyte inside the inner compartment. This hole may be closed with a plastic cap after filling the inner electrolyte to avoid any evaporation and change in the concentration of the inner electrolyte when the RE is not used. This cap may also stay closed during the EIS measurement.

Preferably, the outer compartment comprises a sealable hole for filling the outer electrolyte inside the outer compartment. This hole may be closed with a plastic cap after filling the outer electrolyte to avoid any evaporation and change in the concentration of the electrolyte when the RE is not used. This cap may also stay closed during the EIS measurement.

Preferably, the opening of the outer compartment allows a fluid connection between the outer electrolyte inside the outer compartment and the measurement electrolyte inside the electrochemical cell. In a particularly preferred embodiment, the opening is closed by a glass plug to keep the outer electrolyte inside the outer compartment. A present glass plug should not be so tight that the tip gets completely isolated from the electrochemical cell in which the reference electrode will be immersed. In other words, the glass plug is a connection between the outer electrolyte in the outer compartment and the measurement electrolyte in the electrochemical cell. Preferably, the glass plug is forming a tip of the RE.

However, the RE may also be used without such a glass plug (partly) closing the opening if another approach can be used to keep the outer electrolyte inside the outer compartment. For example, a vacuum that builds up in an upper part of the outer compartment when the outer electrolyte is about to flow out of the opening may be sufficient for that. In particular, if the filling hole of the outer compartment is closed with the plastic cap or the like after filling, then the vacuum produced in the outer compartment will be able to hold the electrolyte in the outer compartment so that a glass plug can be avoided. The tip of the RE is then basically formed at the area of the opening where the outer electrolyte and the measurement electrolyte are contacting one another.

Another aspect of the present invention concerns an electrochemical cell comprising a reference electrode according to the present invention; a working electrode; and a counter electrode; wherein the electrochemical cell is filled with a measurement electrolyte, wherein the reference electrode, the working electrode, and the counter electrode are at least partly immersed in the measurement electrolyte. The invented reference electrode was tested and validated inside such an electrochemical cell.

It is noted that the invented electrode design is examined using a potentiostat with a highest frequency limit of 10 MHz, and therefore, the upper frequency limit of the invented reference electrode design to perform EIS might be higher than 10 MHz. In other words, the invented reference electrode can be examined even for frequencies higher than 10 MHz to find the highest possible frequency.

Extending the upper frequency limit of EIS analysis using this reference electrode design is the main advantage of the present invention, which extends the scope of EIS-related research in all fields of electrochemistry, for instance semiconductor electrochemistry, photoelectrochemistry, electrocatalysis, corrosion, fuel cells, electrochemical sensors, bioelectrochemistry and batteries. For example, EIS analysis at frequencies higher than 100 kHz in addition to the nominal range of 100 kHz to 0.1 Hz for materials like polycrystalline semiconductors with a high degree of defects is a necessity to avoid pitfalls during the interpretation of the EIS results. Otherwise, the EIS response of these defects would overlap with the response from ionized atoms inside the space charge region, which leads to a wrong calculation of the values for the space charge region capacitance as well as the carrier density. It should also be mentioned, that due to the broad range of the invented reference electrode (>10 MHz to 0.1 Hz) compared to the available commercial reference electrodes (~100 kHz to ~0.1 Hz), the effect of the back contact Schottky barrier inside an electrochemical cell, including back contact/semiconductor/electrolyte junctions, could be observed, which is otherwise hidden inside the unmeasured high frequency range.

It is further noted that the dimensions (size, lengths and diameters), experimental parameters (potentials, voltages, currents, frequencies), materials (glass, ceramic, conductive wires, plastics), electrochemical techniques (EIS, P-EIS and P-PEIS) mentioned throughout the present disclosure can be significantly altered according to the design, experimental conditions and the targets of any application. In particular, the exemplarily described reference electrode according to the present invention (I-RE) is a Ag/AgCl-type reference electrode with the inner electrolyte preferably being 3 M NaCl. However, it is clear for the skilled person that the main materials (Ag/AgCl) and the inner electrolyte (NaCl) or its concentration (3 M) can be changed due to the required experimental conditions within the scope of the appended claims, while the altered reference electrode can still be capable to carry out any EIS at higher frequencies (10 MHz to 100 kHz) in addition to the lower frequencies (100 kHz to 0.1 Hz).

With the present invention, the accuracy and limitations of any conventional prior art commercial reference electrode available on the market may be significantly improved, specifically at higher frequencies (like 100 kHz to 10 MHz), by providing an electrical bypass probe according to the present invention to bypass the pathways for ion diffusion. In other words, an amendment of any commercial reference electrode according to the present invention may allow one to carry out any EIS at frequencies higher than its current upper frequency range.

Furthermore, although the exemplarily described reference electrode of the present invention is a high frequency Ag/AgCl reference electrode with 3 M NaCl as the inner electrolyte, it is also possible to design and fabricate some other types of reference electrodes from scratch. In other words, the concepts of the invented reference electrode can further be applied for the design and fabrication steps of a wide variety of available reference electrodes (e.g., Ag/AgCl in KCI, Ag/AgCl in NaCl, Calomel and Mercury) to solve their limitations, specifically at higher frequencies. Specifically, the concept of a bypass probe can be used in the design and fabrication steps of the mass production of any commercial reference electrode to solve their limitation at high frequencies.

In the following, preferred alternative materials for the main probe and suitable inner electrolytes are exemplarily provided: Silver/Silver chloride (Ag/AgCl) reference electrode in saturated KCI, Silver/Silver chloride (Ag/AgCl) reference electrode in 3.5 M KCI, Silver/Silver chloride (Ag/AgCl) reference electrode in 1.0 M KCI, Silver/Silver chloride (Ag/AgCl) reference electrode in 0.1 M KCI, Silver/Silver chloride (Ag/AgCl) reference electrode in saturated NaCl, Silver/Silver chloride (Ag/AgCl) reference electrode in 3.5 M NaCl, Silver/Silver chloride (Ag/AgCl) reference electrode in 1.0 M NaCl, Silver/Silver chloride (Ag/AgCl) reference electrode in 0.1 M NaCl, Saturated calomel (SCE, Hg/Hg₂Cl₂) reference electrode in saturated KCI, Saturated calomel (SCE, Hg/Hg₂Cl₂) reference electrode in 3.5 M KCI, Saturated calomel (SCE, Hg/Hg₂Cl₂) reference electrode in 1.0 M KCI, Saturated calomel (SCE, Hg/Hg₂Cl₂) reference electrode in 0.1 M KCI, Mercury/Mercury sulfate (Hg/Hg₂SO₄) reference electrode in saturated K₂SO₄, Mercury/Mercury sulfate (Hg/Hg₂SO₄) reference electrode in 1.0 M K₂SO₄, Mercury/Mercury sulfate (Hg/Hg₂SO₄) reference electrode in 0.5 M K₂SO₄, Mercury/Mercury sulfate (Hg/Hg₂SO₄) reference electrode in 1.0 M H₂SO₄, Mercury/Mercury sulfate (Hg/Hg₂SO₄) reference electrode in 0.5 M H₂SO₄, Mercury/Mercury oxide (Hg/HgO) reference electrode in 1.0 M NaOH, Mercury/Mercury oxide (Hg/HgO) reference electrode in 20% KOH, Silver/Silver sulfate (Ag/Ag₂SO₄) reference electrode in saturated K₂SO₄, Copper/Copper sulfate (Cu/CuSO₄) reference electrode.

All embodiments described in this specification may be advantageously combined with one another to the extent that their respective features are compatible. In particular, the expressions "according to an embodiment", "in an embodiment", "an embodiment of the invention provides", etc. mean that the respective features may or may not be part of specific embodiments of the present invention.

Further aspects and preferred embodiments of the present invention result from the dependent claims, the drawings and the following description of the drawings. Different disclosed embodiments are advantageously combined with each other if not stated otherwise.

### DESCRIPTION OF THE DRAWINGS

The features of the invention become apparent to those skilled in the art by the detailed description of exemplary embodiments with reference to the attached drawings in which:
- Figure 1: schematically illustrates an I-RE including an exemplarily electrochemical cell for measurements;
- Figure 2: exemplarily demonstrates (a) Nyquist plots with an inset plot to highlight the higher frequency range and (b) Bode plots of the measured EIS at OCP, both for a Pt plate as WE vs. an I-RE, C-RE(SJ) and C-RE(DJ) inside 0.5 M H₂SO₄;
- Figure 3: exemplarily demonstrates (a) Nyquist plots with an inset plot to highlight the higher frequency range and (b) Bode plots of the measured EIS at OCP, both for an FTO film as WE vs. an I-RE and vs. a Pt plate CE inside 0.5 M H₂SO₄;
- Figure 4: exemplarily demonstrates (a) Nyquist plots with two inset plots to highlight the middle and higher frequency range, and (b) Bode plots of the measured EIS at OCP, both for a Cu-Ga-Se sample with Cu/Ga = 0.55 (CGSe) as WE vs. an I-RE (3-electrode configuration), CGSe vs. C-RE(SJ) (3-electrode configuration) and CGSe vs. a Pt plate as the counter electrode (2-electrode configuration) at OCP inside 0.5 M H₂SO₄;
- Figure 5: exemplarily demonstrates a potential stability measurement of an I-RE vs. the most reliable available C-RE(SJ) at OCP;
- Figure 6: schematically illustrates a 2-electrode configuration used for the measurement of the internal impedance of two REs; and
- Figure 7: exemplarily demonstrates (a) Nyquist plots with an inset plot to highlight the higher frequency range and (b) Bode plots of the measured EIS at OCP to measure the internal impedance of the I-RE, C-RE(SJ) and C-RE(DJ).

### DETAILED DESCRIPTION OF THE INVENTION

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art.

Accordingly, processes, elements and techniques that are not considered necessary to those having ordinary skill in the art for a complete understanding of the aspects and features of the present invention may not be described.

As used herein, the term "and/or" includes any and all combinations of one or more of the associated listed items. Further, the use of "may" when describing embodiments of the present invention refers to "one or more embodiments of the present invention". In the following description of embodiments of the present invention, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention. Expressions such as "at least one of", when preceding a list of elements, modify the entire list of elements and do not modify the individual elements of the list.

It will be further understood that although the terms "top view" and "side view" are used to describe different views of the claimed device, these terms should not limit the possible orientations of the device. These terms are only used to distinguish one view from another view. For example, depending on the orientation of the device, a top view may be named a side view or a bottom view, and similarly, a side view may be named a top view or a bottom view, without departing from the scope of the present invention. The same stands for relative directional terms like "in front of", "behind", "above" or "below".

As used herein, the term "substantially", "about" and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centred on the value.

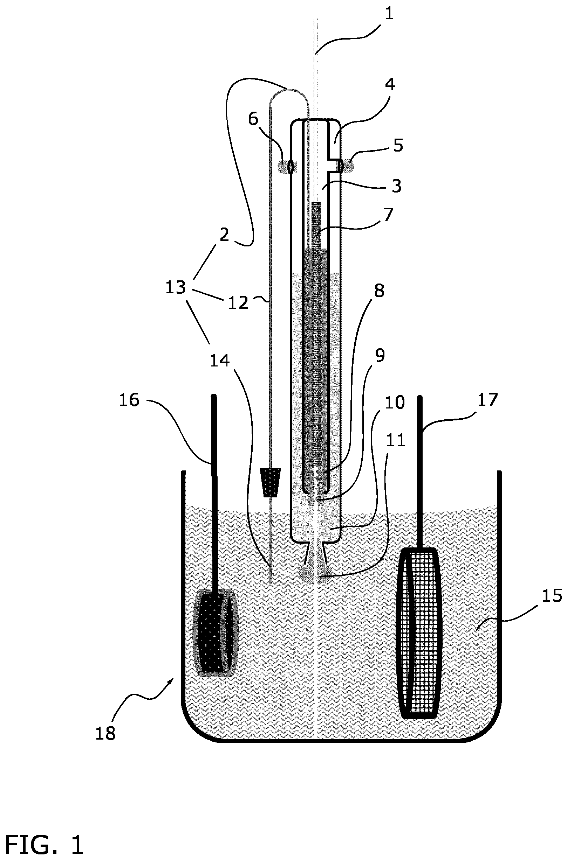

Figure 1 schematically illustrates a reference electrode according to the present invention (I-RE) including an exemplarily electrochemical cell 18 for measurements. The illustrated electrochemical cell 18 is in a 3-electrode configuration and includes a working electrode 16 whose electro-chemical properties shall be investigated, an I-RE to sense the potential of the working electrode 16 versus the fixed potential of the I-RE, and a counter electrode 17 to create any desired potential between the working electrode 16 and the I-RE. All electrodes are immersed in a measurement electrolyte 15 inside the electrochemical cell 18.

The illustrated I-RE for electrochemical impedance spectroscopy in an electrochemical cell 18 filled with a measurement electrolyte 15 comprises a main probe 1 formed of a conductive metal and having a proximal and a distal end, wherein the distal end has a coating 7 with a salt of the metal of the main probe 1, wherein the proximal end of the main probe 1 extends to outside the reference electrode for being connected to a potentiostat to sense the potential; an inner compartment 3 adapted to accommodate an inner electrolyte 8; an outer compartment 4 isolated from and enclosing the inner compartment 3, and adapted to accommodate an outer electrolyte 10 separated from the inner electrolyte 8, wherein the outer compartment 4 is configured to be immersed in the measurement electrolyte 15 of the electrochemical cell 18, wherein the outer compartment 4 has an opening to provide a pathway for ion diffusion between the outer electrolyte 10 and the measurement electrolyte 15; and a frit 9 to separate the inner from the outer compartment 3, 4 and to provide a pathway for ion diffusion between the inner electrolyte 8 and the outer electrolyte 10; wherein the reference electrode further comprises an electrical bypass 13 including an electrical bypass probe 2 to bypass both pathways for ion diffusion. The shown electrochemical cell 18 further includes a working electrode 16 and a counter electrode 17 to provide a 3-electrode configuration for EIS.

Preferably, the electrical bypass probe 2 is formed of a conductive metal and having a proximal and a distal end, wherein the distal ends of the main probe 1 and the electrical bypass probe 2 are positioned at a distance from one another inside the inner compartment 3, wherein the proximal end of the electrical bypass probe 2 extends to outside the reference electrode for being immersed into the measurement electrolyte 15 inside the electrochemical cell 18 to bypass both pathways for ion diffusion.

Preferably, the electrical bypass 13 comprises, at the proximal end of the bypass probe 2, a bypass electrode 14 for being immersed into the measurement electrolyte 15, wherein the bypass electrode 14 and the distal end of the electrical bypass probe 2 are connected directly or via a shielded cable 12. The electrical bypass 13 may thus comprise the electrical bypass probe 2, the bypass electrode 14 and the shielded cable 12. However, if the electrical bypass probe 2 is configured to be directly immersed in the measurement electrolyte 15 inside the electrochemical cell 18, the electrical bypass 13 and the bypass probe 2 are identical, i.e., in this case the electrical bypass 13 may only include the bypass probe 2.

The inner compartment 3 and the outer compartment 4 may both be glassy or plastic tube compartments. The inner compartment 3 comprises a sealable hole 5 for filling the inner electrolyte 8 inside the inner compartment 3 and the outer compartment 4 comprises a sealable hole 6 for filling the outer electrolyte 10 inside the outer compartment 4.

The opening of the outer compartment 4 allows a fluid connection between the outer electrolyte 10 inside the outer compartment 4 and the measurement electrolyte 15 inside the electrochemical cell 18, however, it is shown that the opening is closed by a glass plug 11 to keep the outer electrolyte 10 inside the outer compartment 4. In this case, the glass plug 11 is forming a tip of the reference electrode, but a glass plug 11 is not required may also be omitted in other embodiments as explained above. Pathways for ion diffusion are thus preferably bypassed inside the frit 9 and/or the opening with or without the glass plug 11.

The working electrode 16 is the main electrode of the electrochemical cell 18, whose electro-chemical behaviour should be investigated via performing special experimental conditions like EIS. The main goal of having a RE inside the electrochemical cell 18 is for controlling the potential of the working electrode 16 via sensing its potential versus the RE. The working electrode 16 may be connected to the potentiostat via a conductive connection.

The counter electrode 17 is used to perform any required voltage or pass any desired current between the working electrode 16 and the counter electrode 17 to keep the potential of the working electrode 16 versus the RE in any desired value. The counter electrode 17 should preferably have a surface area that is bigger than that of the surface area of the working electrode 16 and it should be electrochemically stable. Therefore, a piece of Pt mesh or wire is typically used as the counter electrode 17. The counter electrode 17 should also be connected to the potentiostat via a conductive connection.

The electrochemical cell 18 is a compartment filled with the measurement electrolyte 15 to complete the electrochemical circuit and study the electrochemical behaviour of the working electrode 16 inside the cell. The working electrode 16, I-RE and counter electrode 17 are all immersed in this electrolyte and connected separately to the potentiostat.

In the following, exemplarily electrochemical results including EIS investigation and the potential stability of a prototype reference electrode according to the present invention (I-RE) are demonstrated and compared with the results of the two main types of commercially available reference electrodes (C-RE) with different structures (e.g., single-junction with a Vycor glass frit (C-RE(SJ)), and double-junction with a ceramic frit and glass plug (C-RE(DJ)). It is verified that an I-RE allows to carry out any EIS measurement over a much broader frequency range (10 MHz to 0.1 Hz) when compared to the used C-RE, which are limited to frequencies between 100 kHz and 0.1 Hz. In addition, it is confirmed that the I-RE also shows a highly stable electrochemical potential.

Figure 2 exemplarily demonstrates (a) Nyquist plots with an inset plot to highlight the higher frequency range and (b) Bode plots of the measured EIS at OCP, both for a Pt plate as WE vs. an I-RE, C-RE(SJ) and C-RE(DJ) inside 0.5 M H₂SO₄. In particular, an EIS measurement at open circuit potential (OCP) was performed on a platinum plate (Pt) with an area of 1 cm² as the working electrode (WE) to investigate the reliability of the EIS data (Nyquist and Bode plots) obtained by using a reference electrode according to the present invention (I-RE) compared to a single-junction commercial reference electrode (C-RE(SJ)) and a double-junction commercial reference electrode (C-RE(DJ)). The parameters of the EIS analysis were a sinusoidal signal with an amplitude of 10 mV at 71 different frequencies ranging from ~ 1 MHz to 0.1 Hz (on a logarithmic scale). The counter electrode was a Pt-mesh with an area of 9 cm², and the measurement electrolyte was 0.5 M H₂SO₄.

At higher frequencies, the imaginary part of the Nyquist plots (-Z") as well as the phase shift of the Bode plots should decrease for a Pt plate, because of a diffusion phenomenon (Warburg feature, which is due to the electron transport exchange with the surface states of the metal). Furthermore, the module (Z) inside the Bode plot should reveal the resistivity of the electrolyte at very high frequencies. Considering these high frequencies in Figure 2a, the dark grey squares (Pt vs. I-RE) represents this diffusion phenomenon at OCP as the values of -Z" are decreasing while the related phase shift (-phase (°)) goes to ~ 0° (Figure 2b). On the other hand, based on the Nyquist plot of the Pt plate vs. C-RE(SJ) (light grey circles) as well as the Pt plate vs. C-RE(DJ) (black triangles), the values of -Z" for frequencies higher than 63 and 100 kHz, respectively, increase and a turning point as unusual arcs (semicircles) becomes apparent. In addition, the phase shifts (-phase (°)) of these Bode plots drastically increase to ~ 47° and ~ 98° instead of decreasing to 0°. As a result, the obtained values from the performed EIS experiment when using C-RE(SJ) or C-RE(DJ) at frequencies higher than 63 kHz and 100 kHz, respectively, are only artefacts due to the high impedance of these reference electrodes. It should also be noted that the absolute value of the impedance (module (Z) inside the Bode plot) is constant at frequencies higher than 100 kHz for the Bode plot measured when using the I-RE, however, it increases for the Bode plots measured when using the C-RE(SJ) and the C-RE(DJ).

Figure 3 exemplarily demonstrates (a) Nyquist plots with an inset plot to highlight the higher frequency range and (b) Bode plots of the measured EIS at OCP, both for an FTO film as WE vs. an I-RE and vs. a Pt plate CE inside 0.5 M H₂SO₄. In particular, another way to check the reliability of the obtained EIS data of a working electrode (WE) versus any reference electrode (RE) in a 3-electrode configuration (WE vs. RE) is the comparison between these results and the EIS results obtained in a 2-electrode configuration (see Figure 6) with the same working electrode (WE vs. CE). For this, a counter electrode (CE) with a very low impedance (high conductivity) should be used, which is preferable a Pt CE. In fact, the EIS results from the 3-electrode measurement should be very similar to the 2-electrode measurement, because the EIS results should only represent the properties of the working electrode without incorporating any properties of the reference electrode. In other words, when eliminating the reference electrode (in the 2-electrode configuration), the results should not be considerably changed as compared to those obtained in the 3-electrode configuration. So, if the Nyquist plots and phase shifts of the EIS measurements at OCP in the 3-electrode configuration (WE vs. RE) and in the 2-electrode configuration (WE vs. CE) are highly similar, then the EIS spectra obtained with the RE are trustable. Therefore, for further confirmation of the reliability of a reference electrode according to the present invention (IRE), the EIS data (Nyquist and Bode plots) obtained for a Fluorine-doped tin oxide (FTO) film using the I-RE in the 3-electrode configuration is compared with those obtained in the 2-electrode configuration (here, the counter electrode was a Pt plate for both measurements).

As can be seen in Figure 3, the Nyquist and Bode plots obtained for FTO vs. I-RE (3-electrode configuration) are highly similar to those obtained for FTO vs. CE (2-electrode configuration), which further confirms the reliability of the I-RE.

Figure 4 exemplarily demonstrates (a) Nyquist plots with two inset plots to highlight the middle and higher frequency range, and (b) Bode plots of the measured EIS at OCP, both for a Cu-Ga-Se sample with Cu/Ga = 0.55 (CGSe) as WE vs. an I-RE (3-electrode configuration), CGSe vs. C-RE(SJ) (3-electrode configuration) and CGSe vs. a Pt plate as the counter electrode (2-electrode configuration) at OCP inside 0.5 M H₂SO₄. In particular, EIS measurements were also obtained for a wide-band gap Cu-Ga-Se (CGSe) semiconductor thin film (with a Cu/Ga ratio of 0.55) as the working electrode (WE) versus a reference electrode according to the present invention (IRE) and a commercial reference electrode (C-RE(SJ)) in a 3-electrode configuration in order to check the reliability of the I-RE inside a scientifically interesting electrochemical cell. Again, the obtained results were compared with those obtained when using a 2-electrode configuration (WE vs. CE). As mentioned before, if the Nyquist plots and phase shifts of the EIS measurements at OCP in the 3-electrode configuration (WE vs. RE) and in the 2-electrode configuration (WE vs. CE) are highly similar, then the EIS spectra obtained with the RE are reliable.

Here, based on the Nyquist and Bode plots presented in Figure 4, it is clear that the available commercial reference electrode (C-RE(SJ)) was not capable to carry out the EIS measurement on CGSe (Cu/Ga = 0.55) due to its meaningless random data (black scattered triangular dots as artefacts). The main reason for the occurrence of this scattered data when using the commercial reference electrode was the sluggish response of this electrode, which led to fluctuations in sensing the potential of the WE (here CGSe) and therefore the potentiostat was not able to execute a sinusoidal AC signal during the EIS measurement. This sluggish response is also due to the high internal impedance of the reference electrode (~ 550 Ω) as explained in regard to Figure 7. On the other hand, the similarity between the EIS results obtained using the I-RE (grey line and dots) and the CE (Pt plate) (dark grey) in a 2-electrode configuration (dark dots) confirms that performing EIS at high frequencies (between 10 MHz and 100 kHz) employing the I-RE did not influence the collected impedance spectra. This might be due to the very low internal impedance (~ 100 Ω) of the I-RE.

Figure 5 exemplarily demonstrates a potential stability measurement of an I-RE vs. the most reliable available C-RE(SJ) at OCP. In particular, it is expected that the potential difference of two similar reference electrodes (with the same internal materials and electrolyte concentrations) should ideally be 0 µV, however, in real lab conditions values less than 5000 µV are acceptable, while the fluctuation should be less than 1000 µV. Therefore, the stability of the potential of the IRE (with Ag/AgCl in 3 M NaCl) is measured versus the most stable commercial reference electrode (C-RE(SJ)), which also contains Ag/AgCl in 3 M NaCl. The electrolyte of the measurement was also 3 M NaCl.

As can be seen in Figure 5, the difference in the potentials measured at open circuit potential (OCP) between the two reference electrodes is only 82.4 µV, while the fluctuation of the OCP is less than 3 µV, which is both much better than the generally accepted values mentioned above.

Figure 6 schematically illustrates a 2-electrode configuration used for the measurement of the internal impedance of two reference electrodes. A typical electrochemical setup including a potentiostat and a electrochemical cell consists of 4 cables. In the 3-electrode configuration, the working electrode cable (WE_{c}) and the counter electrode cable (CE_{c}) are connected to the working electrode (WE) and the counter electrode (CE), respectively, for applying or measuring the current between them. The sense cable (S_{c}) and the reference electrode cable (RE_{c}) are connected to the WE and the reference electrode (RE), respectively, for sensing the exact potential between them.

As shown in Figure 6, to measure the internal impedance of two reference electrodes in a 2-electrode configuration, the WE_{c} and S_{c} were both connected to one RE, while the RE_{c} and CE_{c} were both connected to the other RE, and the EIS measurements were performed between these two RE at OCP. It should be noted that such an EIS measurement with 2 reference electrodes should be carried out only at OCP mode in order to keep the current passing through the RE at a minimum, since any current passing through a RE would damage it. Such a 2-electrode configuration was also used to perform the EIS measurements between a WE (e.g., FTO) and a CE (e.g., a Pt plate) without using any RE.

Figure 7 exemplarily demonstrates (a) Nyquist plots with an inset plot to highlight the higher frequency range and (b) Bode plots of the measured EIS at OCP to measure the internal impedance of the I-RE, C-RE(SJ) and C-RE(DJ). In particular, in order to measure the internal impedance of a reference electrode according to the present invention (I-RE), first the internal impedance of various C-RE available, such as the single-junction (C-RE(SJ)) and the double junction (C-RE(DJ)) commercial reference electrodes, were measured in a 2-electrode configuration. Subsequently, the impedance of the I-RE was measured inside a 3 M NaCl electrolyte versus one of the commercial single-junction C-RE. It should be mentioned that the inner electrolyte, outer electrolyte and the measurement electrolyte were all 3 M NaCl.

The Nyquist plots obtained from the EIS measurements performed between different sets of reference electrodes presented in Figure 7a reveal a shape that resembles a check mark (✔) symbol. Here, it is assumed that the total impedance of these two electrodes is the module (Z) of the point that the diffusion of ions starts inside the tip of the reference electrodes (Vycor glass frit or ceramic frit), which is the minimum point (bottom) of the check mark symbol (✔) inside the Nyquist plot. Therefore, two C-RE(SJ) from the same brand (same company) showed an overall impedance of ~1101 Ω (~550 Ω for each C-RE(SJ)), while the total impedance of an I-RE in connection to one of those C-RE(SJ) was ~651 Ω. When subtracting the impedance of the C-RE(SJ), this results in an impedance of ~100 Ω for our I-RE. The highest impedance was measured for the commercial double-junction reference electrode (C-RE(DJ)), which is ~7353 Ω (after subtracting the impedance of the other electrode, which was C-RE(SJ)).

More importantly, based on the Bode plots presented in Figure 7(b), it is clear that the phase shift stays below 1° for the I-RE versus C-RE(SJ) at frequencies between 10 kHz to 1 MHz, while the phase shifts for the C-RE(SJ) versus the other C-RE(SJ) and for the C-RE(DJ) versus C-RE(SJ) for the same frequency range go to 5° and 35°, respectively. Therefore, it can be concluded that the I-RE is also reliable for frequencies higher than 100 kHz and it practically does not produce any artefacts.

### REFERENCE LIST

- 1: Main probe (e.g., silver (Ag) wire)
- 2: Electrical bypass probe (e.g., platinum (Pt) wire)
- 3: Inner compartment
- 4: Outer compartment
- 5: Sealable hole for filling an inner electrolyte in the inner compartment
- 6: Sealable hole for filling an outer electrolyte in the outer compartment
- 7: Coating (e.g., silver chloride (AgCl) coating)
- 8: Inner electrolyte (e.g., 3 M NaCl)
- 9: Frit (e.g., ceramic frit or Vycor glass frit)
- 10: Outer electrolyte
- 11: Glass plug
- 12: Shielded cable
- 13: Electrical bypass
- 14: Bypass electrode (e.g., platinum (Pt) wire)
- 15: Measurement electrolyte
- 16: Working electrode
- 17: Counter electrode (e.g., Pt mesh)
- 18: Electrochemical cell

## Claims

1. Reference electrode for electrochemical impedance spectroscopy in an electrochemical cell (18) filled with a measurement electrolyte (15), comprising:
a main probe (1) formed of a conductive metal and having a proximal and a distal end, wherein the distal end has a coating (7) with a salt of the metal of the main probe (1), wherein the proximal end of the main probe (1) extends to outside the reference electrode for being connected to a potentiostat to sense the potential;
an inner compartment (3) adapted to accommodate an inner electrolyte (8);
an outer compartment (4) isolated from and enclosing the inner compartment (3), and adapted to accommodate an outer electrolyte (10) separated from the inner electrolyte (8), wherein the outer compartment (4) is configured to be immersed in the measurement electrolyte (15) of the electrochemical cell (18), wherein the outer compartment (4) has an opening to provide a pathway for ion diffusion between the outer electrolyte (10) and the measurement electrolyte (15); and
a frit (9) to separate the inner from the outer compartment (3, 4) and to provide a pathway for ion diffusion between the inner electrolyte (8) and the outer electrolyte (10);
**characterized in that**
the reference electrode further comprises an electrical bypass (13) including an electrical bypass probe (2) to directly connect the inner electrolyte (8) to the measurement electrolyte (15), thereby bypassing both pathways for ion diffusion.

2. Reference electrode of claim 1, wherein the electrical bypass probe (2) is formed of a conductive metal and having a proximal and a distal end, wherein the distal ends of the main probe (1) and the electrical bypass probe (2) are positioned at a distance from one another inside the inner compartment (3), wherein the proximal end of the electrical bypass probe (2) extends to outside the reference electrode for being immersed into the measurement electrolyte (15) inside the electrochemical cell (18).

3. Reference electrode of any one of the preceding claims, wherein the main probe (1) is a silver wire with a purity of at least 99.9%, preferably having a coating (7) of silver chloride (AgCl) at the distal end.

4. Reference electrode of any one of the preceding claims, wherein the electrical bypass probe (2) is a platinum wire with a purity of at least 99.9%.

5. Reference electrode of any one of claims 2 to 4, wherein the electrical bypass comprises, at the proximal end of the bypass probe (2), a bypass electrode (14) for being immersed into the measurement electrolyte (15), wherein the bypass electrode (14) and the distal end of the electrical bypass probe (2) are connected directly or via a shielded cable (12).

6. Reference electrode of any one of the preceding claims, wherein the bypass electrode (14) is a platinum wire.

7. Reference electrode of any one of the preceding claims, wherein the inner compartment (3) is filled with the inner electrolyte (9), wherein the inner electrolyte (9) is one of 3 M NaCl, 3 M KCI, saturated NaCl or saturated KCI.

8. Reference electrode of any one of the preceding claims, wherein the outer compartment (4) is filled with the outer electrolyte (10), wherein the outer electrolyte (10) preferably corresponds to the measurement electrolyte (15) inside the electrochemical cell (18).

9. Reference electrode of any one of the preceding claims, wherein the inner compartment (3) and/or the outer compartment (4) is a glassy or plastic tube compartment.

10. Reference electrode of any one of the preceding claims, wherein the frit (9) is a ceramic or Vycor glass frit.

11. Reference electrode of any one of the preceding claims,
wherein the inner compartment (3) comprises a sealable hole (5) for filling the inner electrolyte (8) inside the inner compartment (3), and/or
wherein the outer compartment (4) comprises a sealable hole (6) for filling the outer electrolyte (10) inside the outer compartment (4).

12. Reference electrode of any one of the preceding claims, wherein the opening of the outer compartment (4) allows a fluid connection between the outer electrolyte (10) inside the outer compartment (4) and the measurement electrolyte (15) inside the electrochemical cell (18).

13. Reference electrode of claim 12, wherein the opening is closed by a glass plug (11) to keep the outer electrolyte (10) inside the outer compartment (4).

14. Reference electrode of claim 13, wherein the glass plug (11) is forming a tip of the reference electrode.

15. Electrochemical cell (18), comprising:
a reference electrode of any one of the preceding claims;
a working electrode (16); and
a counter electrode (17);
wherein the electrochemical cell (18) is filled with a measurement electrolyte (15), wherein the reference electrode, the working electrode (16), and the counter electrode (17) are at least partly immersed in the measurement electrolyte (15).

## Patentansprüche

1. Referenzelektrode für die elektrochemische Impedanzspektroskopie in einer elektrochemischen Zelle (18), die mit einem Messelektrolyten (15) gefüllt ist, umfassend:
eine Hauptsonde (1), die aus einem leitfähigen Metall gebildet ist und ein proximales Ende und ein distales Ende aufweist, wobei das distale Ende eine Beschichtung (7) aus einem Salz des Metalls der Hauptsonde (1) aufweist, wobei sich das proximale Ende der Hauptsonde (1) bis zur Außenseite der Referenzelektrode erstreckt, um an ein Potentiostat angeschlossen zu werden, das das Potential erfasst;
eine Innenkammer (3), die zum Aufnehmen eines Innenelektrolyten (8) ausgelegt ist;
eine Außenkammer (4), die von der Innenkammer (3) isoliert ist und diese umschließt und zum Aufnehmen eines vom Innenelektrolyten (8) getrennten Außenelektrolyten (10) ausgelegt ist, wobei die Außenkammer (4) so konfiguriert ist, dass sie in den Messelektrolyten (15) der elektrochemischen Zelle (18) eingetaucht wird, wobei die Außenkammer (4) eine Öffnung aufweist, um einen Pfad für Ionendiffusion zwischen dem Außenelektrolyten (10) und dem Messelektrolyten (15) bereitzustellen; und
eine Fritte (9) zum Trennen der Innen- von der Außenkammer (3, 4) und zum Bereitstellen eines Pfads für die Ionendiffusion zwischen dem Innenelektrolyten (8) und dem Außenelektrolyten (10);
**dadurch gekennzeichnet, dass**
die Referenzelektrode ferner einen elektrischen Bypass (13) umfasst, der eine elektrische Bypass-Sonde (2) beinhaltet, um den Innenelektrolyten (8) direkt mit dem Messelektrolyten (15) zu verbinden, wodurch beide Pfade für die Ionendiffusion umgangen werden.

2. Referenzelektrode nach Anspruch 1, wobei die elektrische Bypass-Sonde (2) aus einem leitfähigen Metall gebildet ist und ein proximales Ende und ein distales Ende aufweist, wobei die distalen Enden der Hauptsonde (1) und der elektrischen Bypass-Sonde (2) innerhalb der Innenkammer (3) in einem Abstand zueinander positioniert sind, wobei sich das proximale Ende der elektrischen Bypass-Sonde (2) bis zur Außenseite der Referenzelektrode erstreckt, um in den Messelektrolyten (15) innerhalb der elektrochemischen Zelle (18) eingetaucht zu werden.

3. Referenzelektrode nach einem der vorstehenden Ansprüche, wobei die Hauptsonde (1) ein Silberdraht mit einer Reinheit von mindestens 99,9 % ist und vorzugsweise am distalen Ende eine Beschichtung (7) aus Silberchlorid (AgCl) aufweist.

4. Referenzelektrode nach einem der vorstehenden Ansprüche, wobei die elektrische Bypass-Sonde (2) ein Platindraht mit einer Reinheit von mindestens 99,9 % ist.

5. Referenzelektrode nach einem der Ansprüche 2 bis 4, wobei der elektrische Bypass am proximalen Ende der Bypass-Sonde (2) eine Bypass-Elektrode (14) zum Eintauchen in den Messelektrolyten (15) umfasst, wobei die Bypass-Elektrode (14) und das distale Ende der elektrischen Bypass-Sonde (2) direkt oder über ein abgeschirmtes Kabel (12) verbunden sind.

6. Referenzelektrode nach einem der vorstehenden Ansprüche, wobei die Bypass-Elektrode (14) ein Platindraht ist.

7. Referenzelektrode nach einem der vorstehenden Ansprüche, wobei die Innenkammer (3) mit dem Innenelektrolyten (9) gefüllt ist, wobei der Innenelektrolyt (9) eines von 3 M NaCl, 3 M KCI, gesättigtem NaCl oder gesättigtem KCI ist.

8. Referenzelektrode nach einem der vorstehenden Ansprüche, wobei die Außenkammer (4) mit dem Außenelektrolyten (10) gefüllt ist, wobei der Außenelektrolyt (10) vorzugsweise dem Messelektrolyten (15) innerhalb der elektrochemischen Zelle (18) entspricht.

9. Referenzelektrode nach einem der vorstehenden Ansprüche, wobei die Innenkammer (3) und/oder die Außenkammer (4) eine Glas- oder Kunststoffrohrkammer ist.

10. Referenzelektrode nach einem der vorstehenden Ansprüche, wobei die Fritte (9) eine Keramik- oder Vycor-Glasfritte ist.

11. Referenzelektrode nach einem der vorstehenden Ansprüche,
wobei die Innenkammer (3) ein abdichtbares Loch (5) umfasst, um den Innenelektrolyten (8) in das Innere der Innenkammer (3) zu füllen, und/oder
wobei die Außenkammer (4) ein abdichtbares Loch (6) umfasst, um den Außenelektrolyten (10) in das Innere der Außenkammer (4) zu füllen.

12. Referenzelektrode nach einem der vorstehenden Ansprüche, wobei die Öffnung der Außenkammer (4) eine Fluidverbindung zwischen dem Außenelektrolyten (10) innerhalb der Außenkammer (4) und dem Messelektrolyten (15) innerhalb der elektrochemischen Zelle (18) ermöglicht.

13. Referenzelektrode nach Anspruch 12, wobei die Öffnung durch einen Glasstopfen (11) verschlossen ist, um den Außenelektrolyten (10) innerhalb der Außenkammer (4) zu halten.

14. Referenzelektrode nach Anspruch 13, wobei der Glasstopfen (11) eine Spitze der Referenzelektrode bildet.

15. Elektrochemische Zelle (18), umfassend:
eine Referenzelektrode nach einem der vorstehenden Ansprüche;
eine Arbeitselektrode (16); und
eine Gegenelektrode (17);
wobei die elektrochemische Zelle (18) mit einem Messelektrolyten (15) gefüllt ist, wobei die Referenzelektrode, die Arbeitselektrode (16) und die Gegenelektrode (17) zumindest teilweise in den Messelektrolyten (15) eingetaucht sind.

## Revendications

1. Électrode de référence pour la spectroscopie d'impédance électrochimique dans une cellule électrochimique (18) remplie d'un électrolyte de mesure (15), comprenant :
une sonde principale (1) formée d'un métal conducteur et comportant une extrémité proximale et une extrémité distale, dans laquelle l'extrémité distale comporte un revêtement (7) d'un sel du métal de la sonde principale (1), dans laquelle l'extrémité proximale de la sonde principale (1) s'étend à l'extérieur de l'électrode de référence afin d'être reliée à un potentiostat pour détecter le potentiel ;
un compartiment intérieur (3) adapté pour recevoir un électrolyte intérieur (8) ;
un compartiment extérieur (4) isolé du compartiment intérieur (3) et l'entourant, et adapté pour recevoir un électrolyte extérieur (10) séparé de l'électrolyte intérieur (8), le compartiment extérieur (4) étant configuré pour être immergé dans l'électrolyte de mesure (15) de la cellule électrochimique (18), le compartiment extérieur (4) comportant une ouverture destinée à fournir une voie de diffusion ionique entre l'électrolyte extérieur (10) et l'électrolyte de mesure (15) ; et
une fritte (9) destinée à séparer le compartiment intérieur (3) du compartiment extérieur (4) et à fournir une voie de diffusion ionique entre l'électrolyte intérieur (8) et l'électrolyte extérieur (10) ;
**caractérisée en ce que**
l'électrode de référence comprend en outre une dérivation électrique (13) comportant une sonde de dérivation électrique (2) destinée à relier directement l'électrolyte intérieur (8) à l'électrolyte de mesure (15), contournant ainsi les deux voies de diffusion ionique.

2. Électrode de référence selon la revendication 1, dans laquelle la sonde de dérivation électrique (2) est formée d'un métal conducteur et comporte une extrémité proximale et une extrémité distale, les extrémités distales de la sonde principale (1) et de la sonde de dérivation électrique (2) étant positionnées à une distance l'une de l'autre à l'intérieur du compartiment intérieur (3), l'extrémité proximale de la sonde de dérivation électrique (2) s'étendant à l'extérieur de l'électrode de référence afin d'être immergée dans l'électrolyte de mesure (15) à l'intérieur de la cellule électrochimique (18).

3. Électrode de référence selon l'une quelconque des revendications précédentes, dans laquelle la sonde principale (1) est un fil d'argent d'une pureté d'au moins 99,9 %, comportant de préférence un revêtement (7) de chlorure d'argent (AgCl) à l'extrémité distale.

4. Électrode de référence selon l'une quelconque des revendications précédentes, dans laquelle la sonde de dérivation électrique (2) est un fil de platine d'une pureté d'au moins 99,9 %.

5. Électrode de référence selon l'une quelconque des revendications 2 à 4, dans laquelle la dérivation électrique comprend, au niveau de l'extrémité proximale de la sonde de dérivation (2), une électrode de dérivation (14) destinée à être immergée dans l'électrolyte de mesure (15), l'électrode de dérivation (14) et l'extrémité distale de la sonde de dérivation électrique (2) étant reliées directement ou par l'intermédiaire d'un câble blindé (12).

6. Électrode de référence selon l'une quelconque des revendications précédentes, dans laquelle l'électrode de dérivation (14) est un fil de platine.

7. Électrode de référence selon l'une quelconque des revendications précédentes, dans laquelle le compartiment intérieur (3) est rempli de l'électrolyte intérieur (9), l'électrolyte intérieur (9) étant l'un parmi 3 M de NaCl, 3 M de KCI, le NaCl saturé ou le KCI saturé.

8. Électrode de référence selon l'une quelconque des revendications précédentes, dans laquelle le compartiment extérieur (4) est rempli de l'électrolyte extérieur (10), l'électrolyte extérieur (10) correspondant de préférence à l'électrolyte de mesure (15) à l'intérieur de la cellule électrochimique (18).

9. Électrode de référence selon l'une quelconque des revendications précédentes, dans laquelle le compartiment intérieur (3) et/ou le compartiment extérieur (4) est un compartiment constitué d'un tube en verre ou en plastique.

10. Électrode de référence selon l'une quelconque des revendications précédentes, dans laquelle la fritte (9) est une fritte en céramique ou en verre Vycor.

11. Électrode de référence selon l'une quelconque des revendications précédentes,
dans laquelle le compartiment intérieur (3) comprend un trou scellable (5) destiné au remplissage de l'électrolyte intérieur (8) à l'intérieur du compartiment intérieur (3), et/ou
dans laquelle le compartiment extérieur (4) comprend un trou scellable (6) destiné au remplissage de l'électrolyte extérieur (10) à l'intérieur du compartiment extérieur (4).

12. Électrode de référence selon l'une quelconque des revendications précédentes, dans laquelle l'ouverture du compartiment extérieur (4) permet une communication fluidique entre l'électrolyte extérieur (10) à l'intérieur du compartiment extérieur (4) et l'électrolyte de mesure (15) à l'intérieur de la cellule électrochimique (18).

13. Électrode de référence selon la revendication 12, dans laquelle l'ouverture est fermée par un bouchon en verre (11) afin de maintenir l'électrolyte extérieur (10) à l'intérieur du compartiment extérieur (4).

14. Électrode de référence selon la revendication 13, dans laquelle le bouchon en verre (11) forme une pointe de l'électrode de référence.

15. Cellule électrochimique (18), comprenant :
une électrode de référence selon l'une quelconque des revendications précédentes ;
une électrode de travail (16) ; et
une contre-électrode (17) ;
dans laquelle la cellule électrochimique (18) est remplie d'un électrolyte de mesure (15), et dans laquelle l'électrode de référence, l'électrode de travail (16) et la contre-électrode (17) sont au moins partiellement immergées dans l'électrolyte de mesure (15).
